# EUROPEAN PATENT SPECIFICATION

(11) **EP 2 367 378 B1**
(45) Date of publication and mention of the grant of the patent: **03.07.2013**
(21) Application number: 11002223.3
(22) Date of filing: 17.03.2011
(51) Int. Cl.: H04W 36/00

(54) **Apparatus and methods for controlling sequenced message transfer during signal radio voice call continuity (SRVCC)**
Vorrichtung und Verfahren zur Steuerung einer Sequenznachrichtübertragung während Single Radio Voice Call Continuity (SRVCC)
Appareil et procédés de contrôle de transfert de message séquencé durant la continuité d'un appel vocal radio de signal (SRVCC)

(30) Priority: 18.03.2010 US 315249 P; 16.03.2011 US 201113049361
(43) Date of publication of application: 21.09.2011
(73) Proprietor: HTC Corporation, Taoyuan County 330 (TW)
(72) Inventor: Tiwari, Kundan, Taoyuan City Taoyuan County 330 (TW)
(74) Representative: Wimmer, Hubert

(56) References cited:
- WO-A2-2010/003501
- ERICSSON: "Handling of sequence numbers", 3GPP DRAFT; C1-092120, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia Antipolis (France); 20090427, 27 April 2009 (2009-04-27), XP050337652, [retrieved on 2009-04-27]
- HTC: "Clarification to initialisation of send state varaible after SRVCC handover", 3GPP DRAFT; C1-101645-CR-CLARIFICATION TO INITIALISATION OF SEND STATE VARAIBLE AFTER SRVCC HANDOVER-TS-24.007-REL8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN, vol. CT WG1, no. Kyoto; 20100510, 17 May 2010 (2010-05-17), XP050409540, [retrieved on 2010-05-17]

## Description

### BACKGROUND OF THE INVENTION

### Field of the Invention

The invention generally relates to the technique of sequenced message transfer operation, and more particularly, to apparatuses and methods for controlling sequenced message transfer during a Single Radio Voice Call Continuity (SRVCC) procedure.

### Description of the Related Art

With growing demand for mobile communications, the Global System for Mobile communications (GSM) supporting only Circuit-Switched (CS) domain services no longer meets user requirements. The mobile communications working groups and standard groups accordingly have developed the so-called third generation mobile communications technologies, such as the Wideband Code Division Multiple Access (WCDMA) technology. Taking the Universal Mobile Telecommunications System (UMTS) using the WCDMA technology for example, the 3rd Generation Partnership Project (3GPP) has further proposed the Long Term Evolution (LTE) system, also called the fourth generation mobile communications system, to meet future demand for large wireless data transmission bandwidths. The LTE system aims to provide an all-IP architecture, in which only Packet-Switched (PS) domain instead of CS domain is used to carry all mobile communications services. Also, voice services are provided by Voice over Internet Protocol (VoIP) in the fourth generation mobile communications system, instead of the CS domain of the third generation mobile communications system.

However, during transition from the third generation mobile communications system to the fourth generation mobile communications system, some operators have still chosen to provide voice services via the CS domain of the third generation mobile communications system, as they believe the coverage rate and capacity of the CS domain of the third generation mobile communications system are sufficient and the cost to provide ubiquitous LTE coverage is too high. Thus, a problem arises, wherein the architecture of the third generation mobile communications system comprises both the CS domain and the PS domain while the fourth generation mobile communications system comprises only the PS domain. Accordingly, a new function, called Single Radio Voice Call Continuity (SRVCC), has been specified for the interconnection between the third generation mobile communications system and the fourth generation mobile communications system, so that a voice call may smoothly be transferred from the PS domain of the fourth generation mobile communications system to the CS domain of the third generation mobile communications system.

Before SRVCC is initiated, there may be Non-Access Stratum (NAS) message flows ongoing in a mobile communications device, which are protected using the sequenced message transfer operation. That is, a counted sequence number is maintained for each ongoing NAS message flow, which incrementally counts the sequence number of the next message to be transmitted in the associated NAS message flow. By comparing the sequence number of a currently received message with the sequence number of the last received message, the mobile communications system may determine whether the currently received message is a new transmission or a retransmission. Note that, the sequenced message transfer operation may be reset when SRVCC is initiated and completed successfully, which causes the counted sequence number to be reinitialized to 0. In this situation, the mobile communications system may discard the message received after SRVCC when detecting that the sequence number of the message is out of sequence. As a result, abnormal unsmoothness or even breaking off of the services carried by the ongoing NAS message flows may occur.

ERICSSON: "Handling of sequence numbers", 3GPP DRAFT; C1-092120, 3RD GENERATION PARTNERSHIP PROJECT (3GPP), MOBILE COMPETENCE CENTRE, 650, ROUTE DES LUCIOLES, F-06921 SOPHIA-ANTIPOLIS CEDEX, FRANCE, Sophia Antipolis (France); 27 April 2009, XP050337652, discloses the handling of sequence numbers, in particular for the case of initiation and termination of sequenced message operations.

### BRIEF SUMMARY OF THE INVENTION

In one aspect of the invention, a mobile communications device comprising a wireless module and a controller module is provided. The wireless module selectively performs wireless transceiving to and from a first service network or a second service network. The controller module receives, via the wireless module, a handover request for a handover from the first service network to the second service network, and determines whether a Non-Access Stratum (NAS) message flow with a counted sequence number is active on a Circuit-Switched (CS) domain of the first service network in response to the handover request. Also, the controller module keeps the counted sequence number unchanged in response to the NAS message flow being active on the CS domain of the first service network, wherein the handover request is transmitted by the first service network in response to a Single Radio Voice Call Continuity (SRVCC) procedure between the first service network and the second service network.
The controller module may further preferably perform the handover from the first service network to the second service network according to the handover request, and may further keep the counted sequence number unchanged in response to the handover being successfully performed

In another aspect of the invention, a method for a mobile communications device to control sequenced message transfer during an SRVCC procedure is provided. The method comprises the steps of receiving a handover request for a handover from a first service network to a second service network, determining whether an NAS message flow with a counted sequence number is active on a CS domain of the first service network, and keeping the counted sequence number unchanged in response to the NAS message flow being active on the CS domain of the first service network.
The method further preferably comprises performing a handover from the first service network to the second service network according to the handover request, wherein keeping the counted sequence number unchanged is preferably performed in response to the handover being successfully performed.

Other aspects and features of the present invention will become apparent to those with ordinarily skill in the art upon review of the following descriptions of specific embodiments of apparatuses, systems, and methods for controlling sequenced message transfer during an SRVCC procedure.

### BRIEF DESCRIPTION OF DRAWINGS

The invention can be more fully understood by reading the subsequent detailed description and examples with references made to the accompanying drawings, wherein:

Fig. 1 is a block diagram illustrating a mobile communications environment according to an embodiment of the invention;

Fig. 2 is a message sequence chart illustrating a sequenced message transfer involving an active NAS message flow on the CS domain during an SRVCC procedure according to an embodiment of the invention;

Fig. 3 is a message sequence chart illustrating a sequenced message transfer involving an inactive NAS message flow on the CS domain during an SRVCC procedure according to an embodiment of the invention;

Fig. 4 is a flow chart illustrating a method for controlling sequenced message transfer during an SRVCC procedure according to an embodiment of the invention; and

Fig. 5 is a flow chart illustrating a method for controlling sequenced message transfer during an SRVCC procedure according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The 3GPP specifications are used to teach the spirit of the invention, and the invention is not limited thereto.

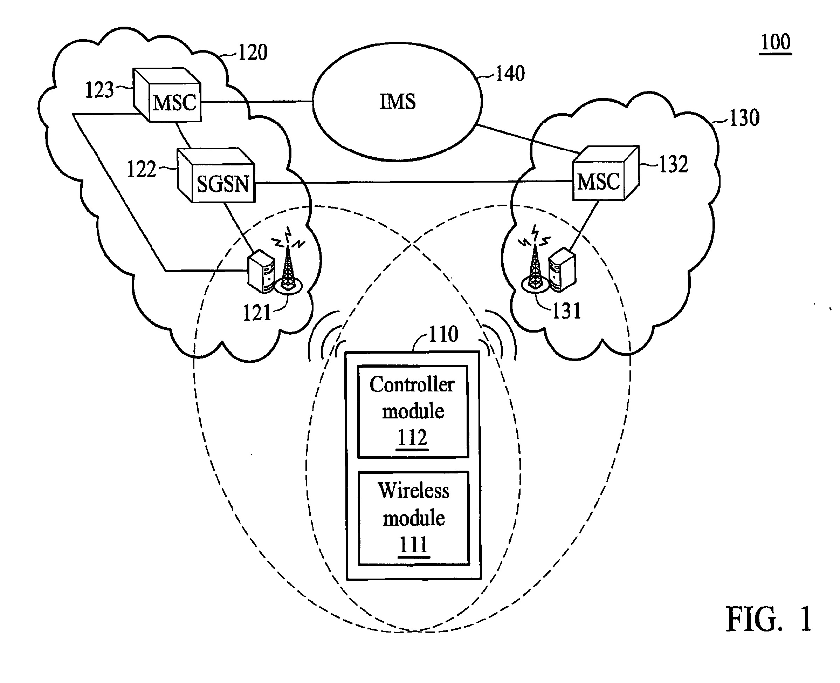

Fig. 1 is a block diagram illustrating a mobile communications environment according to an embodiment of the invention. In the mobile communications environment 100, the mobile communications device 110 may be selectively connected to one of the service networks 120 and 130, wherein the service networks 120 and 130 are both connected to an IMS 140 for anchoring IMS multimedia telephone sessions. In this embodiment, the service network 120 is a UMTS system using the HSPA technology (herein referred to as a HSPA system) which comprises a Universal Terrestrial Radio Access Network (UTRAN) 121 for providing the functionality of wireless transceiving for the service network 120, a Mobile Switching Center (MSC) 122 for routing voice calls, Short Message Service (SMS), and circuit switched data, etc., and a Serving GPRS (General Packet Radio Service) Support Node (SGSN) 123 for handling the packet switched data within the service network 120, e.g. the mobility management and authentication of the users. The service network 130 may be a GSM system which comprises a Base Station Subsystem (BSS) 131 for providing the functionality of wireless transceiving for the service network 130, and an MSC 132 for routing voice calls, SMS, and circuit switched data, etc. Specifically, the mobile communications device 110 is in an area under the overlapped radio coverage of the service networks 120 and 130. The mobile communication device 110 comprises a wireless module 111 for performing the functionality of wireless transceiving to and from one of the service networks 120 and 130. To further clarify, the wireless module 111 may comprise a baseband unit (not shown) and a radio frequency (RF) unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be may be 900MHz, 1800MHz or 1900MHz utilized in GSM systems, or may be 900MHz, 1900MHz, or 2100MHz utilized in HSPA systems, or others depending on the radio access technology (RAT) in use. Also, the mobile communication device 110 comprises a controller module 112 for controlling the operation of the wireless module 111 and other functional components, such as a display unit and/or keypad serving as the MMI (man-machine interface), a storage unit storing the program codes of applications or communication protocols, or others. In this embodiment, the mobile communications device 110 may be a User Equipment (UE) in compliance with the 3GPP TS 23.216 specification, v.9.1.0 (referred to herein as the 23.216 specification), the 3GPP TS 24.007 specification, v.9.0.0 (referred to herein as the 24.007 specification), and/or other related specifications of the HSPA and GSM technologies.

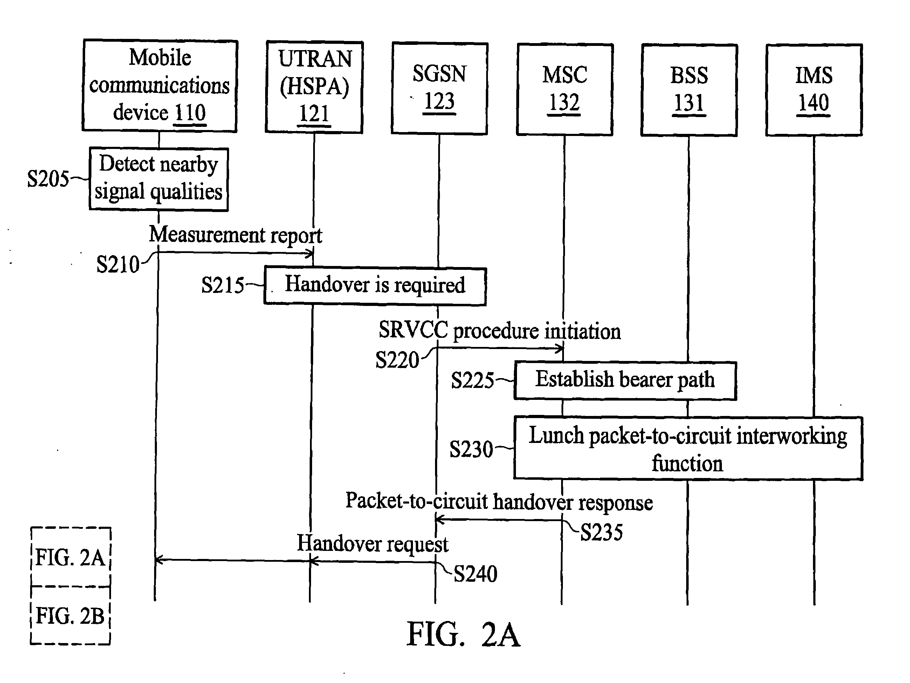

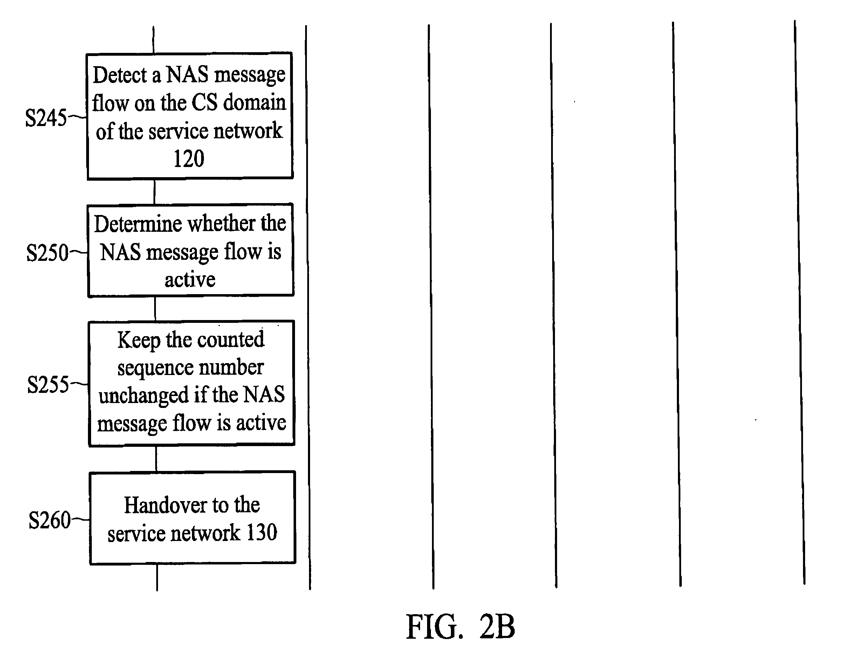

To be more specific, the controller module 112 controls the wireless module 111 for performing sequenced message transfer during an SRVCC procedure. Fig. 2 is a message sequence chart illustrating a sequenced message transfer involving an active NAS message flow on the CS domain during an SRVCC procedure according to an embodiment of the invention. In this embodiment, the mobile communications device 110 is initially connected to the service network 120 for obtaining Voice over IP (VoIP) call service. In addition to the VoIP call service, there is also an NAS message flow on the CS domain between the mobile communications device 110 and the service network 120. Specifically, the NAS message flow on the CS domain may be protected by the sequenced message transfer operation, i.e. a counted sequence number is maintained for the NAS message flow on the CS domain, which may be referred to as a send-state variable, V(D), and incrementally counts the sequence number of the next message to be transmitted in the associated NAS message flow. In one embodiment, the NAS message flow on the CS domain may be established for a Mobility Management (MM) procedure. The MM procedure may include an authentication procedure, identification procedure, Temporary Mobile Subscriber Identity (TMSI) reallocation procedure, MM information procedure, and/or abort procedure. In other embodiments, the NAS message flow on the CS domain may be established for a Call Control (CC) procedure, or Supplementary Service (SS) procedure. The CC procedure may be initiated for decoding address information and/or routing telephone calls, and the SS procedure may be initiated for providing feature services, such as call waiting, call forwarding on busy, and no disturbing, etc. Alternatively, the NAS message flow on the CS domain may be established for any combination of the MM, CC, and SS procedures. Detailed descriptions of the MM, CC, and SS procedures are omitted here for brevity as they are beyond the scope of the invention. Note that, in this embodiment, as the mobile communications device 110 moves closer to the service network 130, the detected signal quality of the service network 120 falls below a predetermined threshold while the detected signal quality of the service network 130 is greater than the predetermined threshold (step S205). The mobile communications device 110 then reports on the detected signal qualities of the service networks 120 and 130 to the service network 120 according to the measurement configuration given by the service network 120 beforehand (step S210). When receiving the measurement report, the service network 120 decides to hand over the mobile communications device 110 to the service network 130 (step S215), and then the SGSN 123 initiates an SRVCC procedure with the MSC 132 (step S220). In another embodiment, after initiating the SRVCC procedure, the SGSN 123 may perform the handover of the non-voice PS bearer if any non-voice PS bearer exists between the service network 120 and the mobile communications device 110. In response to the initiation of the SRVCC procedure, the MSC 132 establishes a bearer path for the mobile communications device 110 in the service network 130 (step S225), and notifies the IMS 140 that the voice call for the mobile communications device 110 needs to be moved from the PS domain to the CS domain, to enable the IMS 140 to perform a packet-to-circuit interworking function for the voice call upon notification by the MSC 132 (step S230). When the transfer of the voice call from the PS domain to the CS domain is completed, the MSC 132 replies to the SGSN 123 with a packet-to-circuit handover response (step S235). The SGSN 123 transmits a handover request to the mobile communications device 110 via the UTRAN 121 in response to the packet-to-circuit handover response (step S240). For the handover request indicating handover from the service network 120 to the service network 130, the controller module 112 detects that an NAS message flow with a counted sequence number exists on the CS domain of the first service network 120 (step S245), and further determines whether the NAS message flow is active (step S250). In this embodiment, due to that the NAS message flow being established for an ongoing SS procedure, the controller module 112 then keeps the counted sequence number unchanged (step S255), so that the ongoing SS procedure may run smoothly after the SRVCC procedure. Lastly, the controller module 112 switches the internal voice processing from VoIP call to CS voice call when the mobile communications device 110 arrives on-channel in the service network 130 (step S260), wherein the voice call may be continued.

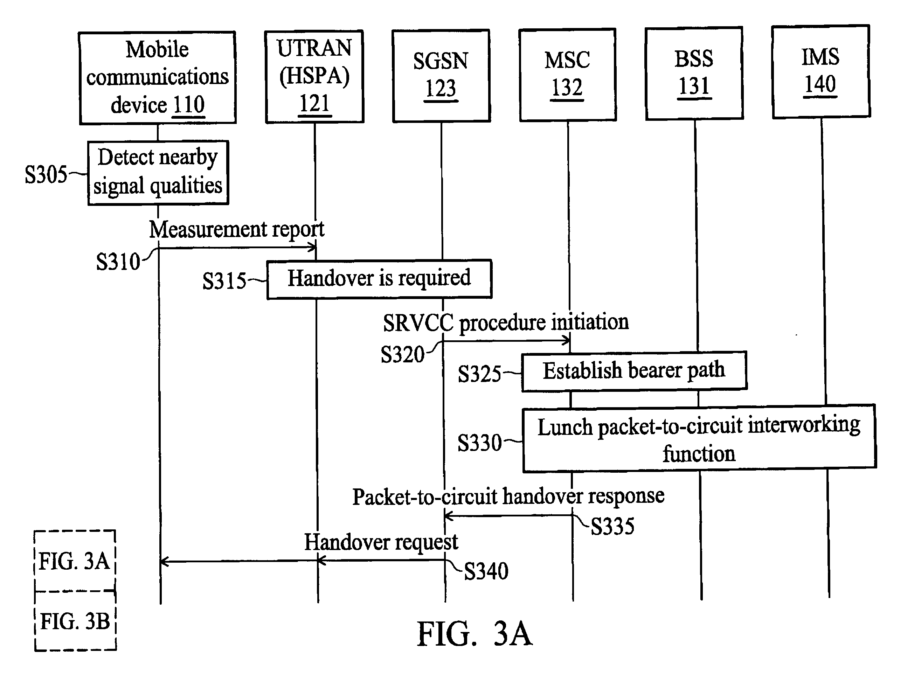

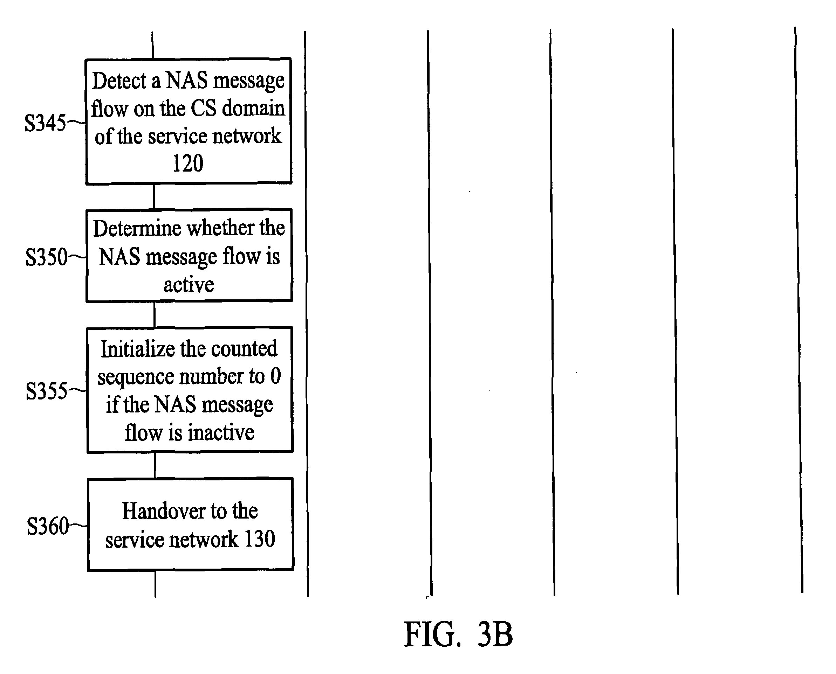

Fig. 3 is a message sequence chart illustrating a sequenced message transfer involving an inactive NAS message flow on the CS domain during an SRVCC procedure according to an embodiment of the invention. Similar to the embodiment of Fig. 2, the mobile communications device 110 is initially connected to the service network 120 for obtaining an IMS emergency call service. In addition to the IMS emergency call service, there is also an NAS message flow on the CS domain between the mobile communications device 110 and the service network 120. Specifically, the NAS message flow on the CS domain may be protected by the sequenced message transfer operation, i.e. a counted sequence number is maintained for the NAS message flow on the CS domain, which may be referred to as a send-state variable, V(D), and incrementally counts the sequence number of the next message to be transmitted in the associated NAS message flow. In one embodiment, the NAS message flow on the CS domain may be established for an MM or CC procedure. The MM procedure may include an authentication procedure, identification procedure, TMSI reallocation procedure, MM information procedure, and/or abort procedure. The CC procedure may be initiated for decoding address information and/or routing telephone calls. In another embodiment, the NAS message flow on the CS domain may be established for any combination of the MM and CC procedures. Detailed descriptions of the MM and CC procedures are omitted here for brevity as they are beyond the scope of the invention. In this embodiment, as the mobile communications device 110 moves closer to the service network 130, the detected signal quality of the service network 120 falls below a predetermined threshold while the detected signal quality of the service network 130 is greater than the predetermined threshold (step S305). The mobile communications device 110 then reports on the detected signal qualities of the service networks 120 and 130 to the service network 120 according to the measurement configuration given by the service network 120 beforehand (step S310). When receiving the measurement report, the service network 120 decides to hand over the mobile communications device 110 to the service network 130 (step S315), and then the SGSN 123 initiates an SRVCC procedure with the MSC 132 (step S320). In another embodiment, after initiating the SRVCC procedure, the SGSN 123 may perform the handover of the non-voice PS bearer if any non-voice PS bearer exists between the service network 120 and the mobile communications device 110. In response to the initiation of the SRVCC procedure, the MSC 132 establishes a bearer path for the mobile communications device 110 in the service network 130 (step S325), and notifies the IMS 140 that the voice call for the mobile communications device 110 needs to be moved from the PS domain to the CS domain, to enable the IMS 140 to perform a packet-to-circuit interworking function for the voice call upon notification by the MSC 132 (step S330). When the transfer of the voice call from the PS domain to the CS domain is completed, the MSC 132 replies to the SGSN 123 with a packet-to-circuit handover response (step S335). The SGSN 123 transmits a handover request to the mobile communications device 110 via the UTRAN 121 in response to the packet-to-circuit handover response (step S340). For the handover request indicating handover from the service network 120 to the service network 130, the controller module 112 detects that an NAS message flow with a counted sequence number exists on the CS domain of the first service network 120 (step S345), and further determines whether the NAS message flow is active (step S350). In this embodiment, due to the fact that the NAS message flow has been previously established for a CC procedure but is inactive for now, the controller module 112 then initializes the counted sequence number to 0 (step S355). Lastly, the controller module 112 switches the internal voice processing from VoIP/IMS call to CS voice call when the mobile communications device 110 arrives on-channel in the service network 130 (step S360), so that the voice call may continue.

Note that, although only one NAS message flow is described in the embodiments of Figs. 2 and 3, there may be more than one NAS message flow which is active or inactive during the SRVCC procedure, and the invention is not limited thereto. For example, in addition to the NAS message flow on the CS domain described above, there may be one or more NAS message flows on the PS domain, which may be established for a Group Call Control (GCC), Broadcast Call Control (BCC), and/or Control-plane Location Services (LCS) procedures. For these cases, the controller module 112 may also initialize each of the counted sequence numbers associated with the NAS message flows on the PS domain to 0 during the SRVCC procedure. In addition, although the embodiments of Figs. 2 and 3 describe the sequenced message transfers during an SRVCC procedure from an HSPA system to a GSM system, the invention may also be applied to the sequenced message transfer during an SRVCC procedure from an HSPA system to any legacy system, such as a WCDMA system or a GPRS system.

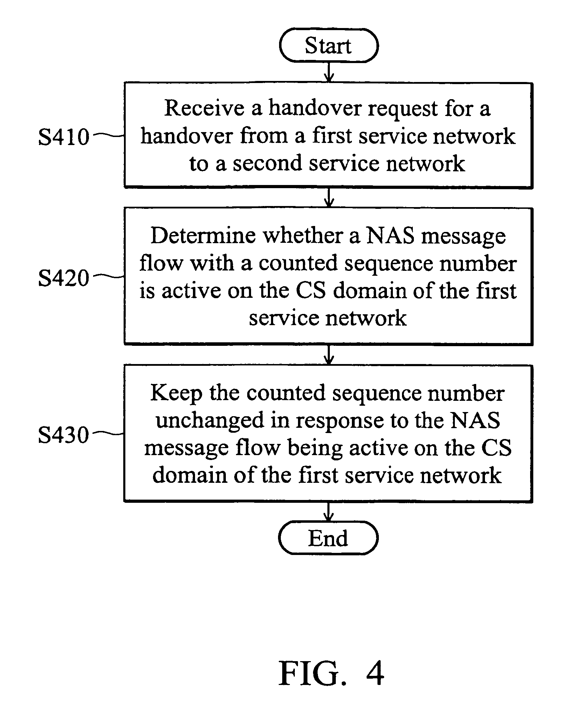

Fig. 4 is a flow chart illustrating a method for controlling sequenced message transfer during an SRVCC procedure according to an embodiment of the invention. In this embodiment, the method for controlling sequenced message transfer during an SRVCC procedure may be applied in a mobile communications device for transferring a voice call from a first service network to a second service network. Initially, the mobile communications device is connected to the first service network for obtaining VoIP call service. In addition to the VoIP call service, there is also an NAS message flow on the CS domain between the mobile communications device and the first service network. Specifically, the NAS message flow on the CS domain is protected by the sequenced message transfer operation, i.e. a counted sequence number is maintained for the NAS message flow on the CS domain, which may be referred to as a send-state variable, V(D), and incrementally counts the sequence number of the next message to be transmitted in the associated NAS message flow. The NAS message flow on the CS domain may be established for an MM, CC, or SS procedure. The MM procedure may include an authentication procedure, identification procedure, TMSI reallocation procedure, MM information procedure, and/or abort procedure. The CC procedure may be initiated for decoding address information and/or routing telephone calls, and the SS procedure may be initiated for providing feature services, such as call waiting, call forwarding on busy, and no disturbing, etc. Alternatively, the NAS message flow on the CS domain may be established for any combination of the MM, CC, and SS procedures. Detailed descriptions of the MM, CC, and SS procedures are omitted here for brevity as they are beyond the scope of the invention. To begin, the mobile communications device receives a handover request for handing over from the first service network to the second service network (step S410). In response to the handover request, the mobile communications device determines whether an NAS message flow with a counted sequence number is active on the CS domain (step S420). If so, the mobile communications device keeps the counted sequence number unchanged (step S430). Thus, the ongoing MM, CC, or SS procedure may run smoothly after the SRVCC procedure.

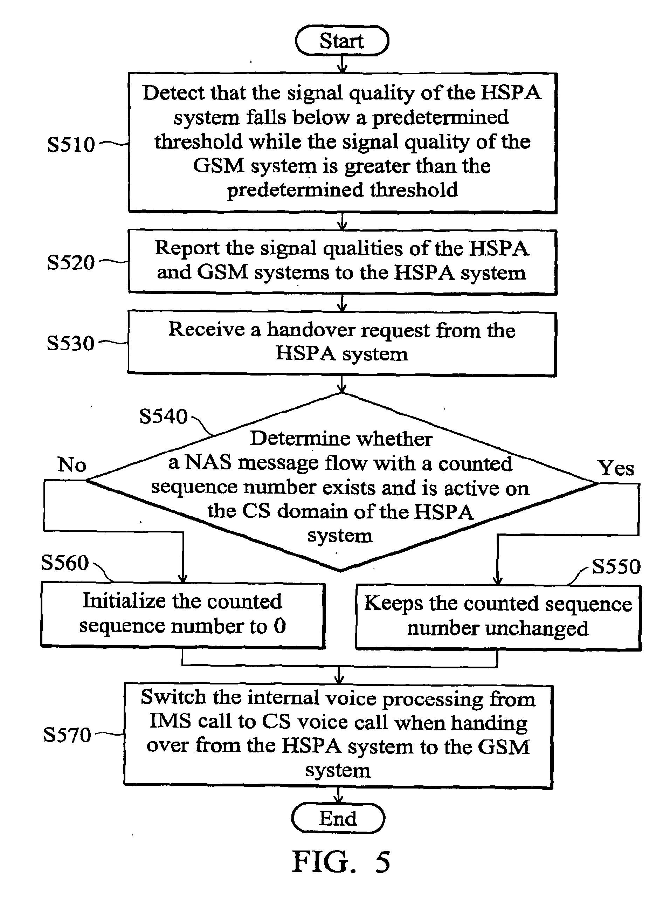

Fig. 5 is a flow chart illustrating a method for controlling sequenced message transfer during an SRVCC procedure according to another embodiment of the invention. In this embodiment, the method for controlling sequenced message transfer during an SRVCC procedure may be applied in a mobile communications device for transferring a voice call from an HSPA system to a GSM system. Initially, the mobile communications device is connected to the HSPA system for obtaining an IMS emergency call service. To begin, the mobile communications device first detects that the signal quality of the HSPA system falls below a predetermined threshold while the signal quality of the GSM system is greater than the predetermined threshold (step S510). The mobile communications device then reports on the signal qualities of the HSPA and GSM systems to the HSPA system (step S520). When receiving the measurement report, the HSPA system decides to hand over the mobile communications device to the GSM system, and initiates an SRVCC procedure with the GSM system to move the voice call from the PS domain of the HSPA system to the CS domain of the GSM system. After the transfer of the voice call is completed, the mobile communications device receives a handover request from the HSPA system (step S530). In response to the handover request, the mobile communications device determines whether an NAS message flow with a counted sequence number exists and is active on the CS domain of the HSPA system (step S540). Specifically, the NAS message flow on the CS domain of the HSPA system is protected by the sequenced message transfer operation, i.e. a counted sequence number is maintained for the NAS message flow on the CS domain of the HSPA system, which may be referred to as a send-state variable, V(D), and incrementally counts the sequence number of the next message to be transmitted in the associated NAS message flow. The NAS message flow on the CS domain may be established for an MM or CC procedure. The MM procedure may include an authentication procedure, identification procedure, TMSI reallocation procedure, MM information procedure, and/or abort procedure, and the CC procedure may be initiated for decoding address information and/or routing telephone calls. Alternatively, the NAS message flow on the CS domain of the HSPA system may be established for any combination of the MM and CC procedures. Detailed descriptions of the MM and CC procedures are omitted here for brevity as they are beyond the scope of the invention. If an NAS message flow with a counted sequence number exists and is active on the CS domain of the HSPA system, the mobile communications device keeps the counted sequence number unchanged (step S550), so that the NAS message flow may continue smoothly after the SRVCC procedure. Otherwise, if no NAS message flow with a counted sequence number exists on the CS domain of the HSPA system or the NAS message previously established on the CS domain of the HSPA system is inactive for now, the mobile communications device initializes the counted sequence number to 0 (step S560). Subsequent to steps S550 and S560, the mobile communications device switches the internal voice processing from IMS call to CS voice call when handing over from the HSPA system to the GSM system (i.e. when arriving on-channel in the GSM system) (step S570), and the SRVCC procedure ends. Note that, although only one NAS message flow is described above, there may be more than one NAS message flow which is active or inactive during the SRVCC procedure, and the invention is not limited thereto. For example, in addition to the NAS message flow on the CS domain of the HSPA system described above, there may be one or more NAS message flows on the PS domain of the HSPA system, which may be established for a GCC, BCC, and/or LCS procedure. For this case, the mobile communications device may also initialize each of the counted sequence numbers associated with the NAS message flows on the PS domain of the HSPA system to 0 during the SRVCC procedure. In addition, although the embodiment describes the sequenced message transfer during an SRVCC procedure from an HSPA system to a GSM system, the invention may also be applied to the sequenced message transfer during an SRVCC procedure from an HSPA system to any legacy system, such as a WCDMA system or a GPRS system.

While the invention has been described by way of example and in terms of preferred embodiment, it is to be understood that the invention is not limited thereto. Those who are skilled in this technology can still make various alterations and modifications without departing from the scope of this invention, as defined by the following claims.

## Claims

1. A mobile communications device (110), comprising:
a wireless module (111) adapted to selectively perform wireless transceiving to and from a first service network (120) or a second service network (130); and
a controller module (112);
**characterized in that**
said controller module (112) is adapted to receive, via the wireless module (111), a handover request for a handover from the first service network (120) to the second service network (130), to determine whether a Non-Access Stratum, NAS, message flow with a counted sequence number is active on a Circuit-Switched, CS, domain of the first service network (120) in response to the handover request, and to keep the counted sequence number unchanged in response to the NAS message flow being active on the CS domain of the first service network (120),
wherein the handover request is transmitted by the first service network (120) in response to a Single Radio Voice Call Continuity, SRVCC, procedure between the first service network (120) and the second service network (130).

2. The mobile communications device (110) of claim 1, wherein the controller module (112) is further adapted to perform the handover from the first service network (120) to the second service network (130) according to the handover request, and the keeping the counted sequence number unchanged is performed in response to the handover being successfully performed.

3. The mobile communications device (110) of claim 1, wherein the controller module (112) is further adapted to initialize the counted sequence number to 0 in response to no NAS message flow being active on the CS domain of the first service network (120).

4. The mobile communications device (110) of claim 3, wherein the initialization of the counted sequence number is performed in response to the handover being successfully performed.

5. The mobile communications device (110) of claim 1, wherein the NAS message flow is a Mobility Management, MM, Call Control, CC, or Supplementary Service, SS, message flow.

6. The mobile communications device (110) of claim 1, wherein the counted sequence number is incremented by one for each transmitted message in the NAS message flow.

7. The mobile communications device (110) of claim 1, wherein the first service network (120) operates in compliance with a High Speed Packet Access, HSPA, mobile telephony protocol, and the second service network (130) operates in compliance with one of the following mobile telephony protocols:
Wideband Code Division Multiple Access, WCDMA;
General Packet Radio Service, GPRS; and
Global System for Mobile Communications, GSM.

8. A method for a mobile communications device (110) to control sequenced message transfer during a Single Radio Voice Call Continuity, SRVCC, procedure, comprising:
receiving a handover request for a handover from a first service network (120) to a second service network (130);
determining whether a Non-Access Stratum, NAS, message flow with a counted sequence number is active on a Circuit-Switched, CS, domain of the first service network (120); and
keeping the counted sequence number unchanged in response to the NAS message flow being active on the CS domain of the first service network (120).

9. The method of claim 8, further comprising performing a handover from the first service network (120) to the second service network (130) according to the handover request, wherein the keeping the counted sequence number unchanged is performed in response to the handover being successfully performed..

10. The method of claim 8, further comprising initializing the counted sequence number to 0 in response to no NAS message flow being active on the CS domain of the first service network (120).

11. The method of claim 10, wherein the initialization of the counted sequence number is performed in response to the handover being successfully performed.

12. The method of claim 8, wherein the NAS message flow is a Mobility Management, MM, Call Control, CC, or Supplementary Service, SS, message flow.

13. The method of claim 8, wherein the counted sequence number is incremented by one for each transmitted message in the NAS message flow.

14. The method of claim 8, wherein the first service network (120) operates in compliance with a High Speed Packet Access, HSPA, mobile telephony protocol, and the second service network (130) operates in compliance with one of the following mobile telephony protocols:
Wideband Code Division Multiple Access, WCDMA;
General Packet Radio Service, GPRS; and
Global System for Mobile Communications, GSM.

## Patentansprüche

1. Eine mobile Kommunikationseinrichtung (110), die Folgendes aufweist:
ein drahtloses Modul (111), das geeignet ist selektiv drahtloses Senden und Empfangen zu und von einem ersten Servicenetzwerk (120) oder einem zweiten Servicenetzwerk (130) auszuführen; und
ein Steuermodul (112);
**dadurch gekennzeichnet, dass**
das Steuermodul (112) dafür geeignet ist über das drahtlose Modul (111) eine Anfrage für einen Handover für einen Handover von dem ersten Servicenetzwerk (120) zu dem zweiten Servicenetzwerk (130) zu empfangen, um zu bestimmen ob ein Non-Access-Stratum, NAS, Nachrichtenfluss mit einem Sequenznummerwert auf einer Circuit-Switched Domäne des ersten Servicenetzwerks (120) aktiv ist, ansprechend auf die Handover-Anfrage und um den Sequenznummerwert unverändert zu lassen, ansprechend auf den NAS Nachrichtfluss, der aktiv ist auf der CS Domäne des ersten Servicenetzwerks (120),
wobei die Handover-Anfrage von dem ersten Servicenetzwerk (120) gesendet wird, ansprechend auf eine Single Radio Voice Call Continuity, SRVCC, Prozedur zwischen dem ersten Servicenetzwerk (120) und dem zweiten Servicenetzwerk (130).

2. Die mobile Kommunikationseinrichtung (110) nach Anspruch 1, wobei das Steuermodul (112) ferner geeignet ist den Handover von dem ersten Servicenetzwerk (120) zu dem zweiten Servicenetzwerk (130) gemäß der Handover-Anfrage auszuführen, und wobei der Schritt den Sequenznummerwert unverändert zu lassen ansprechend auf das erfolgreiche Ausführen des Handovers ist.

3. Die mobile Kommunikationseinrichtung (110) nach Anspruch 1, wobei das Steuermodul (112) ferner geeignet ist den Sequenznummerwert mit 0 zu initialisieren, darauf ansprechend, dass kein NAS Nachrichtenfluss auf der CS Domäne des ersten Servicenetzwerks (120) aktiv ist.

4. Die mobile Kommunikationseinrichtung (110) nach Anspruch 3, wobei die Initialisierung des Sequenznummerwerts ausgeführt wird, darauf ansprechend ob der Handover erfolgreich ausgeführt wurde.

5. Die mobile Kommunikationseinrichtung (110) nach Anspruch 1, wobei der NAS Nachrichtenfluss ein Mobility Management, MM, ein Call Control, CC, oder ein Supplementary Service, SS, Nachrichtenfluss ist.

6. Die mobile Kommunikationseinrichtung (110) nach Anspruch 1, wobei der Sequenznummerwert für jede gesendete Nachricht in dem NAS Nachrichtenfluss um den Wert eins inkrementiert wird.

7. Die mobile Kommunikationseinrichtung (110) nach Anspruch 1, wobei das erste Servicenetzwerk (120) in Übereinstimmung mit einem High Speed Packet Access, HSPA, Mobiltelefonprotokoll betrieben wird, und wobei das zweite Servicenetzwerk (130) in Übereinstimmung mit einem der folgenden Mobiltelefonprotokolle betrieben wird:
Wideband Code Division Multiple Access, WCDMA;
General Packet Radio Service, GPRS; und
Global System for Mobile Communication, GSM.

8. Ein Verfahren für eine mobile Kommunikationseinrichtung (110), um einen sequenzierten Nachrichtentransfer während einer Single Radio Voice Call Continuity, SRVCC, Prozedur zu steuern, wobei das Verfahren die folgenden Schritte aufweist:
Empfangen einer Handover-Anfrage für einen Handover von einem ersten Servicenetzwerk (120) zu einem zweiten Servicenetzwerk (130);
Bestimmen ob ein Non-Access Stratum, NAS, Nachrichtenfluss mit einem Sequenznummerwert auf einer Circuit-Switched, CS, Domäne des ersten Servicenetzwerks (120) aktiv ist; und
Beibehalten des Sequenznummerwerts, darauf ansprechend ob der NAS Nachrichtenfluss auf der CS Domäne des ersten Servicenetzwerks (120) aktiv ist.

9. Das Verfahren nach Anspruch 8, wobei das Verfahren ferner das Ausführen eines Handover von dem ersten Servicenetzwerk (120) zu dem zweiten Servicenetzwerk (130) gemäß der Handover-Anfrage aufweist, und wobei der Schritt den Sequenznummerwert unverändert zu lassen ansprechend auf das erfolgreiche Ausführen des Handovers ist.

10. Das Verfahren nach Anspruch 8, wobei das Verfahren ferner das initialisieren des Sequenznummerwerts mit 0 aufweist, darauf ansprechend, dass kein NAS Nachrichtenfluss auf der CS Domäne des ersten Servicenetzwerks (120) aktiv ist.

11. Das Verfahren nach Anspruch 10, wobei die Initialisierung des Sequenznummerwerts ausgeführt wird, darauf ansprechend ob der Handover erfolgreich ausgeführt wurde.

12. Das Verfahren nach Anspruch 8, wobei der NAS Nachrichtenfluss ein Mobility Management, MM, ein Call Control, CC, oder ein Supplementary Service, SS, Nachrichtenfluss ist.

13. Das Verfahren nach Anspruch 8, wobei der Sequenznummerwert für jede gesendete Nachricht in dem NAS Nachrichtenfluss um den Wert eins inkrementiert wird.

14. Das Verfahren nach Anspruch 8, wobei das erste Servicenetzwerk (120) in Übereinstimmung mit einem High Speed Packet Access, HSPA, Mobiltelefonprotokoll betrieben wird, und das zweite Servicenetzwerk (130) in Übereinstimmung mit einem der folgenden Mobiltelefonprotokolle betrieben wird:
Wideband Code Division Multiple Access, WCDMA;
General Packet Radio Service, GPRS; und
Global System for Mobile Communication, GSM.

## Revendications

1. Dispositif de communication mobile (110), comprenant :
un module sans fil (111) adapté à réaliser sélectivement des émissions-réceptions sans fil à destination et en provenance d'un premier réseau de service (120) ou d'un deuxième réseau de service (130) ; et
un module contrôleur (112) ;
**caractérisé en ce que**
le module de contrôleur (112) est adapté à recevoir, par l'intermédiaire du module sans fil (111), une requête de transfert pour un transfert à partir du premier réseau de service (120) vers le deuxième réseau de service (130), pour déterminer si un flux de messages de Strate de Non-Accès, NAS, ayant un numéro de séquence compté est actif sur un domaine à Commutation de Circuits, CS, du premier réseau de service (120) en réponse à la requête de transfert, et pour maintenir inchangé le numéro de séquence compté en réponse au fait que le flux de messages NAS soit actif sur le domaine CS du premier réseau de service (120),
dans lequel la requête de transfert est émise par le premier réseau de service (120) en réponse à une procédure de Continuité d'Appel Vocal Radio Unique, SRVCC, entre le premier réseau de service (120) et le deuxième réseau de service (130).

2. Dispositif de communication mobile (110) selon la revendication 1, dans lequel le module contrôleur (112) est en outre adapté à réaliser le transfert à partir du premier réseau de service (120) vers le deuxième réseau de service (130) conformément à la requête de transfert, et le maintien inchangé du numéro de séquence compté est réalisé en réponse au fait que le transfert soit réalisé avec succès.

3. Dispositif de communication mobile (110) selon la revendication 1, dans lequel le module contrôleur (112) est en outre adapté à initialiser le numéro de séquence compté à 0 en réponse au fait qu'aucun flux de messages NAS ne soit actif sur le domaine CS du premier réseau de service (120).

4. Dispositif de communication mobile (110) selon la revendication 3, dans lequel l'initialisation du numéro de séquence compté est réalisée en réponse au fait que le transfert soit réalisé avec succès.

5. Dispositif de communication mobile (110) selon la revendication 1, dans lequel le flux de messages NAS est un flux de messages de Gestion de Mobilité, MM, de Contrôle d'Appel, CC, ou de Service Supplémentaire, SS.

6. Dispositif de communication mobile (110) selon la revendication 1, dans lequel le numéro de séquence compté est incrémenté de un pour chaque message émis dans le flux de messages NAS.

7. Dispositif de communication mobile (110) selon la revendication 1, dans lequel le premier réseau de service (120) fonctionne en conformité avec un protocole de téléphonie mobile d'Accès par Paquets à Haute Vitesse, HSPA, et le deuxième réseau de service (130) fonctionne en conformité avec l'un des protocoles de téléphonie mobile suivants :
Accès Multiple par Différence de Code à Large Bande, WCDMA ;
Service Général de Paquets Radio, GPRS ; et
Système Global pour des Communications Mobiles, GSM.

8. Procédé pour un dispositif de communication mobile (110) pour contrôler un transfert de messages séquencé pendant une procédure de Continuité d'Appel Vocal Radio Unique, SRVCC, comprenant les étapes suivantes :
recevoir une requête de transfert pour un transfert à partir d'un premier réseau de service (120) vers un deuxième réseau de service (130) ;
déterminer si un flux de messages de Strate de Non-Accès, NAS, ayant un numéro de séquence compté est actif sur un domaine à Commutation de Circuits, CS, du premier réseau de service (120) ; et
maintenir inchangé le numéro de séquence compté en réponse au fait que le flux de messages NAS soit actif sur le domaine CS du premier réseau de service (120).

9. Procédé selon la revendication 8, comprenant en outre la réalisation d'un transfert à partir du premier réseau de service (120) vers le deuxième réseau de service (130) conformément à la requête de transfert, dans lequel le maintien inchangé du numéro de séquence compté est réalisé en réponse au fait que le transfert soit réalisé avec succès.

10. Procédé selon la revendication 8, comprenant en outre une initialisation du numéro de séquence compté à 0 en réponse au fait qu'aucun flux de messages NAS ne soit actif sur le domaine CS du premier réseau de service (120).

11. Procédé selon la revendication 10, dans lequel l'initialisation du numéro de séquence compté est réalisée en réponse au fait que le transfert soit réalisé avec succès.

12. Procédé selon la revendication 8, dans lequel le flux de messages NAS est un flux de messages de Gestion de Mobilité, MM, de Contrôle d'Appel, CC, ou de Service Supplémentaire, SS.

13. Procédé selon la revendication 8, dans lequel le numéro de séquence compté est incrémenté de un pour chaque message émis dans le flux de messages NAS.

14. Procédé selon la revendication 8, dans lequel le premier réseau de service (120) fonctionne en conformité avec un protocole de téléphonie mobile d'Accès par Paquets à Haute Vitesse, HSPA, et le deuxième réseau de service (130) fonctionne en conformité avec l'un des protocoles de téléphonie mobile suivants :
Accès Multiple par Différence de Code à Large Bande, WCDMA ;
Service Général de Paquets Radio, GPRS ; et
Système Global pour des Communications Mobiles, GSM.
